# EUROPEAN PATENT SPECIFICATION

(11) **EP 4 475 515 B1**
(45) Date of publication and mention of the grant of the patent: **18.11.2026**
(21) Application number: 23749517.1
(22) Date of filing: 17.01.2023
(51) Int. Cl.: H04L 67/565, G06Q 10/20, G06Q 50/10, H04L 67/567, H04L 69/18, H04L 69/08

(54) **INFORMATION COLLECTION DEVICE, INFORMATION COLLECTION METHOD, AND PROGRAM**
INFORMATIONSSAMMELVORRICHTUNG, INFORMATIONSSAMMELVERFAHREN UND PROGRAMM
DISPOSITIF DE COLLECTE D'INFORMATIONS, PROCÉDÉ DE COLLECTE D'INFORMATIONS, ET PROGRAMME

(30) Priority: 03.02.2022 JP 2022015689
(43) Date of publication of application: 11.12.2024
(73) Proprietor: Citizen Watch Co., Ltd., Nishitokyo-shi, Tokyo 188-8511 (JP); Citizen Systems Japan CO., LTD., Nishitokyo-shi, Tokyo 188-8511 (JP)
(72) Inventor: KAWASHIMA Takeaki, Nishitokyo-shi, Tokyo 188-8511 (JP); IRISAWA Yasuaki, Nishitokyo-shi, Tokyo 188-8511 (JP); NOGUCHI Yoshikazu, Nishitokyo-shi, Tokyo 188-8511 (JP); KAGEYAMA Yasuhiro, Nishitokyo-shi, Tokyo 188-8511 (JP); SAEKI Ayano, Nishitokyo-shi, Tokyo 188-8511 (JP); TAKAHASHI Satoshi, Nishitokyo-shi, Tokyo 188-8511 (JP)
(74) Representative: Dilg, Haeusler, Schindelmann Patentanwaltsgesellschaft mbH
(86) International application number: PCT/JP2023/001234
(87) International publication number: WO 2023/149201

(56) References cited:
- JP-A- 2014 010 770
- KR-A- 20180 036 068
- US-A1- 2014 181 277
- US-A1- 2022 028 252
- JUHANI LATVAKOSKI ET AL: "Towards Horizontal Architecture for Autonomic M2M Service Networks", FUTURE INTERNET, vol. 6, no. 2, 6 May 2014 (2014-05-06), pages 261 - 301, XP055292296, DOI: 10.3390/fi6020261

## Description

### BACKGROUND

### 1. TECHNICAL FIELD

The present invention relates to an information collection apparatus, an information collection method, and a program.

### 2. RELATED ART

JP 2019 071558 A relates to an information processing apparatus, an apparatus management system, an apparatus management method, and a program and describes that a device management sends information on the device to the device management unit corresponding to an account (for example, a customer, a contractor, etc.) that has a contract with a service provider that provides a service in accordance with the contract. US 2014/181277 A1 pertains to methods, systems, and computer program products for managing technology resources across multiple platforms. JUHANI LATVAKOSKI ET AL: "Towards Horizontal Architecture for Autonomic M2M Service Networks", FUTURE INTERNET, vol. 6, no. 2, 6 May 2014, pages 261-301, XP 055292296 concerns Machine-to-Machine Networks.

### GENERAL DISCLOSURE

The present invention is defined by the independent claims. Advantageous embodiments are described in the dependent claims, the following description and the drawings. A first aspect of the present invention provides an information collection apparatus. The information collection apparatus collects information on one or more devices through one or more mediation apparatuses. The information collection apparatus includes a communication unit which receives, from a plurality of provider apparatuses that provide a customer with a service of managing the one or more devices, first job information describing a specific processing that a target is caused to execute, in a manner unique to each of the plurality of provider apparatuses, the target including both the one or more mediation apparatuses and the one or more devices, or only the one or more mediation apparatuses. The information collection apparatus includes a conversion unit which converts the first job information received by the communication unit into second job information describing the specific processing that the target is caused to execute in a manner such that the one or more mediation apparatuses can recognize it, and delivers the second job information to the one or more mediation apparatuses through the communication unit.

At least any one of the one or more devices and the one or more mediation apparatuses is associated with the plurality of provider apparatuses in a one-to-multiple relationship. The communication unit receives result information indicating a result of the target executing the specific processing in accordance with the second job information, from the one or more mediation apparatuses. The conversion unit converts the result information into update information in a manner unique to each of the plurality of provider apparatuses associated with the at least any one, and distributes the update information simultaneously to the plurality of provider apparatuses associated with the at least any one.

The conversion unit may deliver third job information that describes a processing of causing result information indicating a result of the target executing the specific processing in accordance with the second job information to be returned to the information collection apparatus, in a manner such that the one or more mediation apparatuses can recognize it, to the one or more mediation apparatuses through the communication unit together with the second job information.

The communication unit may receive, from the plurality of provider apparatuses together with the first job information, a customer ID of a customer who is managing a device caused to execute the specific processing based on the first job information. The conversion unit may link the second job information to the customer ID received by the communication unit.

The information collection apparatus may further include a storage unit which stores, in a mutually linked manner, an API-KEY of each of the one or more mediation apparatuses and a customer ID of each of one or more customers provided with the service from the plurality of provider apparatuses. The conversion unit may specify, by referring to the storage unit, a customer ID corresponding to an API-KEY presented by the one or more mediation apparatuses requesting reception and delivery of the second job information. When the customer ID corresponding to the API-KEY matches the customer ID linked to the second job information, the conversion unit may deliver the second job information to the one or more mediation apparatuses requesting the reception and delivery of the second job information, through the communication unit.

The communication unit may receive, from the plurality of provider apparatuses together with the first job information and the customer ID, a device ID of a device caused to execute the specific processing based on the second job information corresponding to the first job information. The conversion unit may link the second job information to the customer ID and the device ID received by the communication unit. When the customer ID corresponding to the API-KEY matches the customer ID linked to the second job information, the conversion unit may deliver the second job information to the one or more mediation apparatuses requesting the reception and delivery of the second job information, through the communication unit together with the device ID.

The storage unit may store, in a mutually linked manner, a provider apparatus ID of each of the plurality of provider apparatuses and a device ID of each of the one or more devices. The communication unit may receive result information indicating a result of a device connected to the one or more mediation apparatuses to which the second job information has been delivered executing the specific processing in accordance with the second job information, from the one or more mediation apparatuses to which the second job information has been delivered, together with the device ID of the device that has executed the specific processing. The conversion unit may specify, by referring to the storage unit, one or more provider apparatus IDs including the provider apparatus ID that are linked to the device ID received by the communication unit. The conversion unit may convert the result information into update information in a manner unique to each of one or more provider apparatuses corresponding to the one or more provider apparatus IDs including the provider apparatus ID. The conversion unit may distribute the device ID and the update information to the one or more provider apparatuses corresponding to the one or more provider apparatus IDs including the provider apparatus ID through the communication unit.

The information collection apparatus may include a communication unit which receives, from one or more devices to be managed, device information on the one or more devices through one or more mediation apparatuses. The information collection apparatus may include a conversion unit which converts the device information into update information in a manner unique to each of one or more provider apparatuses, among a plurality of provider apparatuses that provide a customer with a service of managing one or more devices through one or more mediation apparatuses, that manage the one or more devices corresponding to the device information received by the communication unit, and distributes the update information to the one or more provider apparatuses through the communication unit.

The information collection apparatus may further include a storage unit which stores, in a mutually linked manner, a device ID of each of the one or more devices and a provider apparatus ID of each of the plurality of provider apparatuses. The communication unit may receive the device information from the one or more devices together with the device ID. The conversion unit may specify, by referring to the storage unit, one or more provider apparatus IDs including the provider apparatus ID that are linked to the device ID received by the communication unit, and distribute the device ID and the update information to one or more provider apparatuses corresponding to the one or more provider apparatus IDs including the provider apparatus ID through the communication unit.

The manner unique to each of the provider apparatuses may be one of script designation via a remote shell (rsh), script designation via a secure shell (SSH), or script designation through email automatic processing.

A second aspect of the present invention provides an information collection method. The information collection method includes performing reception by receiving, from a plurality of provider apparatuses that provide a customer with a service of managing one or more devices through one or more mediation apparatuses, first job information that is instructed in a manner unique to each of the plurality of provider apparatuses and for causing the one or more devices to execute a specific processing. The information collection method includes performing conversion by converting the first job information received in the performing the reception by into second job information that can be executed by the one or more devices, and by delivering the second job information to the mediation apparatus requesting reception and delivery of the second job information. At least any one of the one or more devices and the one or more mediation apparatuses is associated with the plurality of provider apparatuses in a one-to-multiple relationship, the information collection method further comprising: receiving result information indicating a result of the target executing the specific processing in accordance with the second job information, from the one or more mediation apparatuses, and converting the result information into update information in the manner unique to each of the plurality of provider apparatuses associated with the at least any one, and distributing the update information simultaneously to the plurality of provider apparatuses associated with the at least any one.

The information collection method may be a method for collecting information on one or more devices through the one or more mediation apparatuses. The information collection method may include performing another reception by, from a plurality of provider apparatuses that provide a customer with a service of managing the one or more devices, first job information describing a specific processing that a target is caused to execute, in a manner unique to each of the plurality of provider apparatuses, the target including both the one or more mediation apparatuses and the one or more devices, or only the one or more mediation apparatuses. The information collection method may include performing another conversion by converting the first job information received in the performing the reception into second job information describing the specific processing that the target is caused to execute in a manner such that the one or more mediation apparatuses can recognize it, and by delivering the second job information to the one or more mediation apparatuses.

Another aspect of the present invention provides a computer program. The program, when executed by a computer, causes the computer to execute an information collection method for collecting information on one or more devices through one or more mediation apparatuses. The information collection method includes receiving, from a plurality of provider apparatuses that provide a customer with a service of managing the one or more devices, first job information describing a specific processing that a target is caused to execute, in a manner unique to each of the plurality of provider apparatuses, the target including both the one or more mediation apparatuses and the one or more devices, or only the one or more mediation apparatuses. The information collection method includes performing conversion by converting the first job information received in the receiving into second job information describing the specific processing that the target is caused to execute in a manner such that the one or more mediation apparatuses can recognize it, and by delivering the second job information to the one or more mediation apparatuses. At least any one of the one or more devices and the one or more mediation apparatuses is associated with the plurality of provider apparatuses in a one-to-multiple relationship, the information collection method further comprising: receiving result information indicating a result of the target executing the specific processing in accordance with the second job information, from the one or more mediation apparatuses, and converting the result information into update information in the manner unique to each of the plurality of provider apparatuses associated with the at least any one, and distributing the update information simultaneously to the plurality of provider apparatuses associated with the at least any one.

The computer program may, when executed by a computer, causes the computer to execute operations including performing another conversion by converting the device information into update information in a manner unique to each of one or more provider apparatuses, among a plurality of provider apparatuses that provide a customer with a service of managing one or more devices through one or more mediation apparatuses, that manage the one or more devices corresponding to the device information received in the performing the reception, and by distributing the update information to the one or more provider apparatuses.

The summary clause does not necessarily describe all necessary features of the embodiments of the present invention. In addition, the invention may also be a sub-combination of the features described above.

### BRIEF DESCRIPTION OF THE DRAWINGS

FIG. 1 is a schematic view of an information collection system 10.
FIG. 2 is a flow diagram of an exemplary first information collection method.
FIG. 3 is a flow diagram of an exemplary second information collection method.
FIG. 4 is a schematic view of an information collection system 11.
FIG. 5 illustrates an example of a computer 1200 in which a plurality of aspects of the present invention may be entirely or partially embodied.

### DESCRIPTION OF EXEMPLARY EMBODIMENTS

Hereinafter, the present invention will be described through embodiments of the invention, but the following embodiments do not limit the invention according to the claims. In addition, not all of the combinations of features described in the embodiments are essential to the solution of the invention.

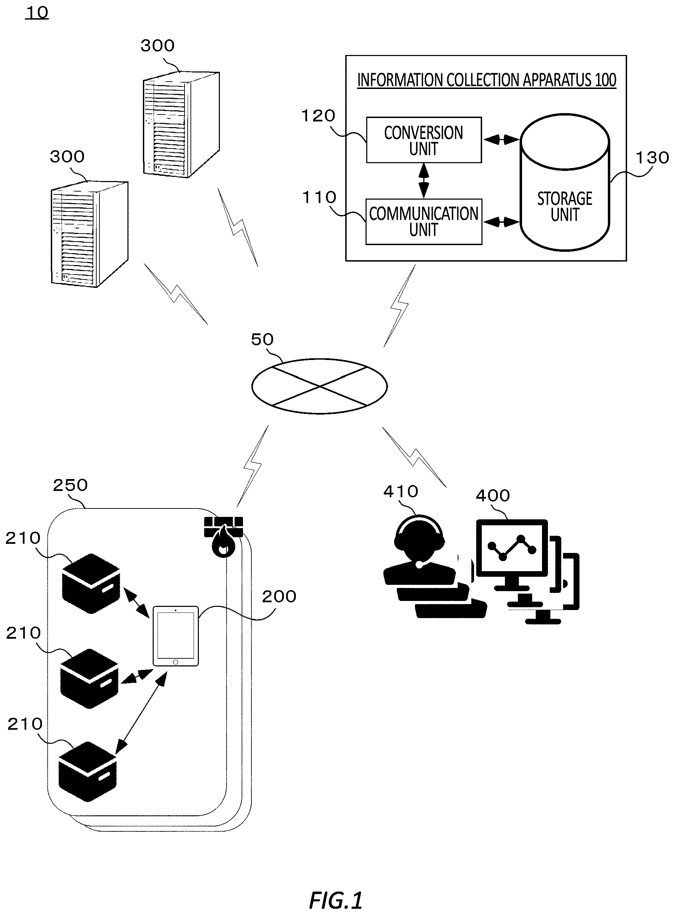

FIG. 1 is a schematic view of an information collection system 10. The information collection system 10 includes an information collection apparatus 100, a mediation apparatus 200, a device 210, a provider apparatus 300, and a customer terminal 400. The information collection apparatus 100, the mediation apparatus 200, the provider apparatus 300, and the customer terminal 400 can communicate with each other through a communication network 50. The communication network 50 is, for example, a communication line such as Internet or a mobile telephone network (3G, LTE).

The information collection system 10 provides a customer 410 with a service that allows remote monitoring or remote maintenance of one or more devices 210 to be managed by the customer 410, by the information collection apparatus 100 cooperating with the mediation apparatus 200 and the provider apparatus 300. The information collection system 10 in the present embodiment includes a plurality of devices 210, a plurality of mediation apparatuses 200, a plurality of provider apparatuses 300, and a plurality of customers 410, each of which has identification information (ID) for identifying each individual.

The one or more devices 210 to be managed by the customer 410 are, for example, printers, photocopiers, multifunction machines, POS, or the like, and are placed in a Local Area Network (LAN) 250 being under the management of the customer 410. The one or more devices 210 are placed in, for example, a company of the customer 410.

In the present embodiment, the customer 410 is a user, that is, an end user, of the device 210. The customer 410 utilizes the service mentioned above through the customer terminal 400 at a location remote from the one or more devices 210 to be managed by the customer 410.

In the present embodiment, the mediation apparatus 200 is placed in the LAN 250 being under the management of the customer 410 together with the one or more devices 210. The mediation apparatus 200 is communicably connected to the one or more devices 210 by the LAN 250. It should be noted that the LAN 250 may be wired or wireless.

The mediation apparatus 200 obtains, from the information collection apparatus 100 through the communication network 50, second job information being based on first job information generated by the one or more provider apparatuses 300. The mediation apparatus 200 further causes a device 210 to be managed being in the LAN 250 to execute a specific processing, for example, a maintenance operation or a firmware update in accordance with the second job information or refers to state information stored in the mediation apparatus 200 for monitoring a state of the device 210, and reports result information indicating the result to the information collection apparatus 100. It should be noted that the mediation apparatus 200 may obtain third job information generated by the information collection apparatus 100 from the information collection apparatus 100 through the communication network 50 together with the second job information, cause the device 210 to execute the specific processing in accordance with the second job information or refer to reference information stored in the mediation apparatus 200, and report result information indicating the result to the information collection apparatus 100 in accordance with the third job information. It should be noted that the result information is also an example of device information.

The mediation apparatus 200 also collects the state information for monitoring the state of the device 210 to be managed being in the LAN 250, and provides it to the information collection apparatus 100 through the communication network 50. The state of the device 210 may refer to, for example, a state where a power on or off state of the device 210 is, or a state where an error has occurred. It should be noted that the state information is an example of device information. It should be noted that the LAN 250 may be protected by a firewall, and in this case, the mediation apparatus 200 has a communication function going beyond the firewall.

In the present embodiment, each of one or more mediation apparatuses 200 has an Application Programing Interface (API) - KEY, and also the information collection apparatus 100 has a WebAPI for communication with the one or more mediation apparatuses 200. Each of the mediation apparatuses 200 accesses the information collection apparatus 100 by using the API-KEY, has its API-KEY authenticated by the WebAPI of the information collection apparatus 100, and has its correspondence relationship with one or more customers 410 specified.

It should be noted that the customer 410 may be a manufacturer of the device 210, and in this case, the customer 410 may remotely monitor or maintain the one or more devices 210, which are his/her in-house products, placed in each of a plurality of LANs 250, through the mediation apparatus 200 placed in each of the LANs 250.

The information collection apparatus 100 is a server placed in a center (cloud), for example, and collects information on the one or more devices 210 through the one or more mediation apparatuses 200. The information collection apparatus 100 includes a communication unit 110 and a conversion unit 120. The information collection apparatus 100 according to the present embodiment further includes a storage unit 130.

The communication unit 110 receives the first job information from the plurality of provider apparatuses 300. The first job information is information describing a specific processing that a target is caused to execute in a manner unique to each of the plurality of provider apparatuses 300. The target includes both the one or more mediation apparatuses 200 and the one or more devices 210, or one or more mediation apparatuses 200 only.

The communication unit 110 also receives device information on the one or more devices 210 from the one or more devices 210 through the one or more mediation apparatuses 200. The communication unit 110 also may receive the device information from the one or more mediation apparatuses 200 having stored therein the device information, instead of receiving the device information from the one or more devices 210.

The manner unique to each of the plurality of provider apparatuses 300 mentioned above may be, as an example, such that a type of a command describing the specific processing is unique. As a specific example, the manner unique to each of the plurality of provider apparatuses 300 is one of script designation via a remote shell (rsh), script designation via a secure shell (SSH), or script designation through email automatic processing. The manner unique to each of the plurality of provider apparatuses 300 may be also, as another example, such that a format of data used to execute the command describing the specific processing is unique or that the number of arguments is unique. The manner unique to each of the plurality of provider apparatuses 300 may be also such that the type is not unique, that is, the type is common, and the format is unique. The manner unique to each of the plurality of provider apparatuses 300 may be also such that the format is not unique, that is, the format is common, and the type is unique. The manner unique to each of the plurality of provider apparatuses 300 may be also such that both the type and the format are unique.

In addition, the communication unit 110 in the present embodiment receives, from the plurality of provider apparatuses 300 together with the first job information, a device ID of the device 210 caused to execute the specific processing based on the first job information. The communication unit 110 in the present embodiment further receives, from the plurality of provider apparatuses 300 together with the first job information, a customer ID of the customer 410 who is managing the device 210 caused to execute the specific processing based on the first job information.

The conversion unit 120 converts the first job information received by the communication unit 110 into the second job information describing the specific processing that the target mentioned above is caused to execute in a manner such that the one or more mediation apparatuses 200 can recognize it. The conversion unit 120 further delivers the second job information to the one or more mediation apparatuses 200 through the communication unit 110. As an example, the conversion unit 120 in the present embodiment delivers the second job information to the mediation apparatus 200 requesting reception and delivery of the second job information.

The conversion unit 120 also converts the device information into update information in a manner unique to each of the one or more provider apparatuses 300, among the plurality of provider apparatuses 300, who manage the one or more devices 210 corresponding to the device information received by the communication unit 110. The conversion unit 120 further distributes the update information to the one or more provider apparatuses 300 through the communication unit 110. It should be noted that the manner unique to each of the one or more provider apparatuses 300 referred to here is the same as the manner mentioned above.

The storage unit 130 stores, in a mutually linked manner, an API-KEY of each of the one or more mediation apparatuses 200 and a customer ID of each of the one or more customers 410 provided with the service from the plurality of provider apparatuses 300. In addition, the storage unit 130 stores, in a mutually linked manner, a provider apparatus ID of each of the plurality of provider apparatuses 300 and a device ID of each of the one or more devices 210.

The storage unit 130 in the present embodiment stores, in a mutually linked manner, the device ID of the device 210, the API-KEY of the mediation apparatus 200 placed in the same LAN 250 as the device 210, the customer ID of the customer 410 who manages the one or more devices 210 in the LAN 250, and provider apparatus IDs of the one or more provider apparatuses 300 with which the customer 410 has a contract.

The plurality of provider apparatuses 300 provide the customer 410 with a service of managing the one or more devices 210. More specifically, each of the provider apparatuses 300 provides, on the Web to the one or more customers 410 with whom it has a contract for providing the service, an interface that allows remote monitoring or remote maintenance of the one or more devices 210 to be managed by each of the customers 410. In other words, through the interface provided by the one or more provider apparatuses 300 with which the customer 410 has a contract, the customer 410 instructs the one or more devices 210 to be managed to execute the specific processing, or views the device information sent from the devices 210 or from the mediation apparatus 200 having stored therein the device information on the devices 210.

The provider apparatus 300 sends the first job information to the information collection apparatus 100 through the communication network 50, and receives, as a response, the result information from the information collection apparatus 100. In addition, the provider apparatus 300 receives the device information from the information collection apparatus 100 through the communication network 50.

In the present embodiment, each of the one or more provider apparatuses 300 has an API, and also, the information collection apparatus 100 has an API client for communication with the one or more provider apparatuses 300. As an example, each of the provider apparatuses 300 accesses the information collection apparatus 100 via its own API, and also has its own API called by the API client of the information collection apparatus 100 and has information distributed. Instead, each of the provider apparatuses 300 may access the information collection apparatus 100 via its own agent, and also have its own agent called by the API client of the information collection apparatus 100 and have information distributed. The API or the agent of each of the provider apparatuses 300 sends the first job information to the information collection apparatus 100 or receives the device information from the information collection apparatus 100 in the manner unique to each of the provider apparatuses 300 mentioned above.

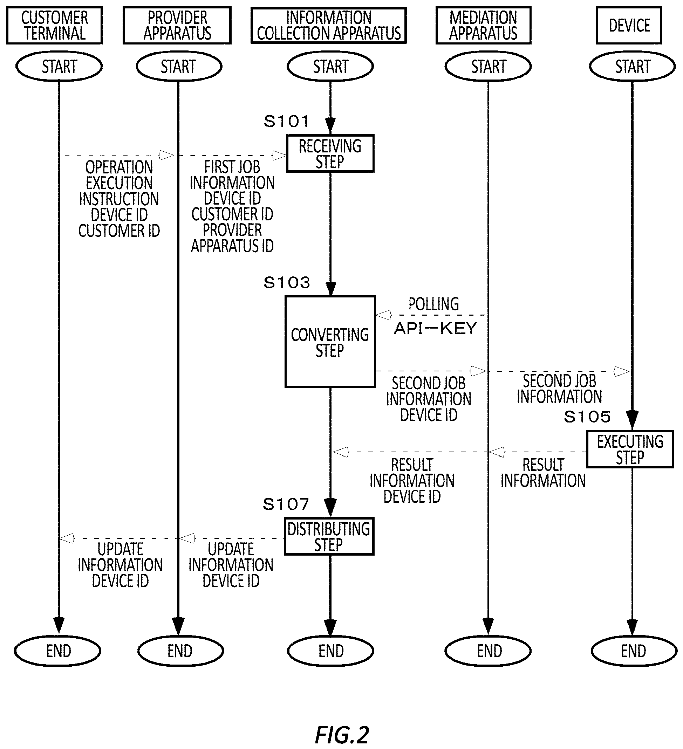

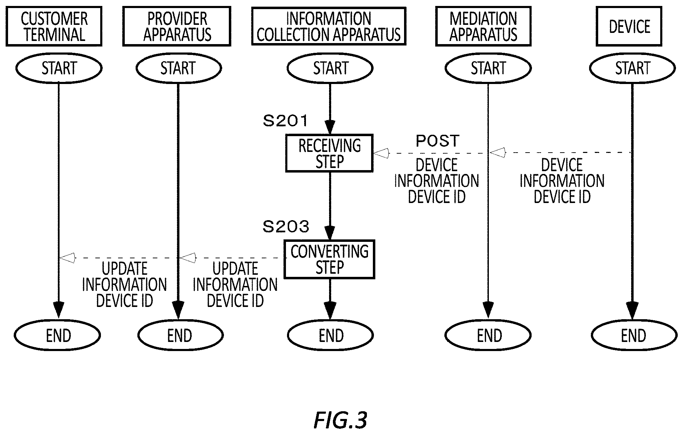

FIG. 2 is a flow diagram of an exemplary first information collection method. An information collection apparatus 100 previously stores in a storage unit 130, in a mutually linked manner, a device ID of a device 210, an API-KEY of a mediation apparatus 200 placed in the same LAN 250 as the device 210, a customer ID of a customer 410 who manages one or more devices 210 in the LAN 250, and provider apparatus IDs of one or more provider apparatuses 300 with which the customer 410 has a contract. The same applies to a flow shown in FIG. 3, and repeated description will be omitted.

The flow is started by the customer 410 inputting, through a customer terminal 400, an instruction to cause the one or more devices 210 being managed by the customer 410 to execute a specific processing. That is, the customer terminal 400 sends, based on an instruction of the customer 410, an operation execution instruction to the one or more provider apparatuses 300 with which the customer 410 has a contract, together with device IDs of the one or more devices 210 and the customer ID of the customer 410. Correspondingly, the provider apparatus 300 generates, based on the operation execution instruction in a unique manner, first job information describing the specific processing that both the mediation apparatus 200 and the one or more devices 210 are caused to execute, and sends the provider apparatus ID of the provider apparatus 300 to the information collection apparatus 100 together with the first job information, the device ID, and the customer ID.

The information collection apparatus 100 receives, from a plurality of provider apparatuses 300, the first job information described above that describes in a manner unique to each of the plurality of provider apparatuses 300 (step S101). As mentioned above, the information collection apparatus 100 in the present embodiment receives the device ID, the customer ID, and the provider apparatus ID together with the first job information.

The information collection apparatus 100 converts the first job information received in the step S101 into second job information, and delivers the second job information to the mediation apparatus 200 requesting reception and delivery of the second job information (step S103). The second job information is information describing the specific processing that both the mediation apparatus 200 and the one or more devices 210 are caused to execute in a manner such that the mediation apparatus 200 can recognize it.

As for the step 103, more specifically, a conversion unit 120 of the information collection apparatus 100 links the second job information to the device ID received by a communication unit 110. The conversion unit 120 further links the second job information to the customer ID received by the communication unit 110 as well.

The conversion unit 120 further specifies, by referring to the storage unit 130, the customer ID corresponding to the API-KEY presented by the mediation apparatus 200 requesting the reception and delivery of the second job information. It should be noted that the request for the reception and delivery of the second job information may be made through polling from the mediation apparatus 200 to the information collection apparatus 100.

When the customer ID corresponding to the API-KEY matches the customer ID linked to the second job information, the conversion unit 120 further delivers the second job information to the mediation apparatus 200 requesting the reception and delivery of the second job information, through the communication unit 110. The conversion unit 120 also delivers the device ID linked to the second job information to the mediation apparatus 200 together with the second job information.

It should be noted that, as an example, the mediation apparatus 200 in the present embodiment communicates with the information collection apparatus 100 through a communication network 50 by utilizing an HTTP method. In this case, the mediation apparatus 200 may designate an endpoint of get /jobs/:deviceid to a WebAPI of the information collection apparatus 100.

In response to obtaining the second job information from the information collection apparatus 100 together with the device ID, the mediation apparatus 200 causes the device 210 corresponding to the device ID, among the one or more devices 210 connected to the mediation apparatus 200, to execute the specific processing in accordance with the second job information (step S105). The processing by the mediation apparatus 200 is intended for the mediation apparatus 200 itself to execute the specific processing in accordance with the second job information. When receiving, from the device 210 as a response to causing the device 210 to execute the specific processing, result information indicating a result of executing the specific processing, the mediation apparatus 200 also sends the result information to the information collection apparatus 100 together with the device ID of the device 210. The processing by the mediation apparatus 200 is also intended for the mediation apparatus 200 itself to execute the specific processing in accordance with the second job information.

The communication unit 110 of the information collection apparatus 100 receives the result information together with the device ID from the mediation apparatus 200 to which the second job information has been delivered. In response, the conversion unit 120 of the information collection apparatus 100 distributes the device ID and update information to the one or more provider apparatuses 300 (step S107).

More specifically, the conversion unit 120 specifies, by referring to the storage unit 130, one or more provider apparatus IDs linked to the device ID received by the communication unit 110. The conversion unit 120 further converts the result information into the update information in a manner unique to each of the one or more provider apparatuses 300 corresponding to the one or more provider apparatus ID. The conversion unit 120 further distributes the device ID and the update information to the one or more provider apparatuses 300 corresponding to the one or more provider apparatus IDs through the communication unit 110.

As a more specific example of the step S105 to the step S107, the second job information is: information that describes a specific processing for the device 210 of updating a firmware of the device 210; and information that describes a specific processing for the mediation apparatus 200 of causing the device 210 to execute the specific processing and of sending result information indicating the result to the information collection apparatus 100. When the firmware is successfully rewritten, the device 210 updates a firmware version. When receiving the update result from the device 210, the mediation apparatus 200, to the WebAPI of the information collection apparatus 100, performs presentation of the API-KEY and designation of an endpoint of post /device/:deviceid, and sends result information corresponding to the update result. The information collection apparatus 100 specifies the customer ID by authenticating the API-KEY, and simultaneously distributes, to the one or more provider apparatuses 300 with which the customer 410 corresponding to the customer ID has a contract, update information, corresponding to the result information, that a firmware number is to be updated.

The provider apparatus 300 sends the device ID and the update information received from the information collection apparatus 100 to the customer terminal 400 which is a sender of the operation execution instruction mentioned above, and the flow ends. It should be noted that, in response to the customer 410 requesting, through the customer terminal 400, to view the update information, the provider apparatus 300 may allow the customer 410 to view the update information on the Web.

As described in the present embodiment, the second job information converted from the first job information by the information collection apparatus 100 may describe the specific processing in a manner such that both the mediation apparatus 200 and the device 210 can recognize it. In this case, a target caused to execute the specific processing can include both one or more mediation apparatuses 200 and one or more devices 210. When the second job information describes the specific processing in a manner such that both the mediation apparatus 200 and the device 210 can recognize it, the mediation apparatus 200 may be the only target caused to execute the specific processing, that is, the device 210 may be excluded from the target. In addition, instead, the second job information may describe the specific processing in a manner such that the device 210 cannot recognize it but the mediation apparatus 200 can recognize it. In this case, the one or more mediation apparatuses 200 can be the only targets caused to execute the specific processing.

Even if the device 210 executes the specific processing, the mediation apparatus 200 will always cause the device 210 to execute the specific processing, and the processing will be the specific processing executed by the mediation apparatus 200. In contrast, when the specific processing is only delivering device information stored in the mediation apparatus 200 to the information collection apparatus 100, it is sufficient to simply deliver the device information obtained so far by the mediation apparatus 200 to the information collection apparatus 100, and thus the device 210 does not intervene. In this manner, both cases can be conceived where both the mediation apparatus 200 and the device 210 execute their respective specific processings and where only the mediation apparatus 200 executes the specific processing.

The second job information may previously include, as the specific processing, job information that the mediation apparatus 200 is caused to execute and job information that the device 210 is caused to execute. As an example in this case, the mediation apparatus 200 may obtain the second job information, and transfer, in accordance with the job information for the mediation apparatus 200 "transfer the job information for the device 210 to the device 210" included in the second job information, the job information for the device 210 included in the second job information to the device 210. In this case, the mediation apparatus 200 only needs to be able to recognize the job information for the device 210 as transfer data. Therefore, the job information for the device 210 may describe the specific processing in a manner such that the mediation apparatus 200 cannot recognize it, or may describe the specific processing in a manner such that the mediation apparatus 200 can recognize it. In addition, the device 210 only needs to be able to recognize the job information for the device 210. Therefore, the job information for the mediation apparatus 200 may describe the specific processing in a manner such that the device 210 cannot recognize it, or may describe the specific processing in a manner such that the device 210 can recognize it.

Further, the device 210 may execute the specific processing in accordance with the second job information, and send result information indicating the result to the mediation apparatus 200. Further, the mediation apparatus 200 may send the result information to the information collection apparatus 100 in accordance with the second job information.

According to such an information collection system 10, a function of the mediation apparatus 200 can be simplified compared to a case where each of the mediation apparatuses 200 newly generates the job information for the device 210 in accordance with the second job information. In addition, when the information collection apparatus 100 generates the second job information describing the specific processing in a manner such that any mediation apparatus 200 and any device 210 can recognize it, the second job information sent from the information collection apparatus 100 can be shared among a plurality of mediation apparatuses 200 and a plurality of devices 210, so the information collection system 10 can be simplified.

As an example of a case where the second job information describes the specific processing in a manner such that the device 210 cannot recognize it but the mediation apparatus 200 can recognize it, the mediation apparatus 200 may obtain the second job information, and refer to the device information stored in the mediation apparatus 200, for example, state information such as the firmware version of the device 210, without exchanging information with the device 210, in accordance with the second job information. The mediation apparatus 200 may further send the state information to the information collection apparatus 100 in accordance with the second job information. In this case, the mediation apparatus 200 executes the specific processing of referring to the device information stored in the mediation apparatus 200, without exchanging information with the device 210, and of sending the state information to the information collection apparatus 100, the device information returned to the information collection apparatus 100 corresponds to the result information indicating the result of executing the specific processing.

As another example of a case where a case where the second job information describes the specific processing in a manner such that the device 210 cannot recognize it but the mediation apparatus 200 can recognize it, the conversion unit 120 may generate third job information that describes a processing of causing the result information indicating the result of the target mentioned above executing the specific processing in accordance with the second job information to be returned to the information collection apparatus 100, in a manner such that the one or more mediation apparatuses 200 can recognize it. In this case, the conversion unit 120 delivers the third job information to the one or more mediation apparatuses 200 through the communication unit 110 together with the second job information.

As an example of a case where the conversion unit 120 delivers the second job information and the third job information to the mediation apparatus 200, the mediation apparatus 200 may obtain the second job information and the third job information, cause the device 210 to execute the specific processing in accordance with the second job information, and receive result information indicating the result from the device 210. The mediation apparatus 200 may further send the result information to the information collection apparatus 100 in accordance with the third job information. In this case, the mediation apparatus 200 itself executes the specific processing of instructing the device 210 to execute the specific processing and to return result information indicating the result to the mediation apparatus 200.

The specific processing executed by the mediation apparatus 200 itself in accordance with the second job information, which is described here, may include, for example, a processing in which the mediation apparatus 200 newly generates another job information describing some processing in a manner such that the device 210 can recognize it, and sends the another job information to the device 210. Specifically, first of all, the second job information may be, for example, information that describes a processing for the mediation apparatus 200 of updating the firmware of the device 210. Then, the mediation apparatus 200 that has interpreted this information may generate another job information that describes a processing for the device 210 of executing the processing of updating the firmware and of reporting a result of execution of the processing to the mediation apparatus 200, and send the another job information to the device 210.

In addition, as another example of a case where the conversion unit 120 delivers the second job information and the third job information to the mediation apparatus 200, the mediation apparatus 200 may obtain the second job information and the third job information, and refer to the device information stored in the mediation apparatus 200, for example, the state information such as the firmware version of the device 210, in accordance with the second job information. The mediation apparatus 200 may further send the state information to the information collection apparatus 100 in accordance with the third job information. In this case, the mediation apparatus 200 does not exchange information with the device 210. In addition, in this case, the mediation apparatus 200 executes the specific processing of referring to the device information stored in the mediation apparatus 200, and the device information sent to the information collection apparatus 100 corresponds to the result information indicating the result of executing the specific processing.

In this manner, the information collection apparatus 100 can generate the third job information mentioned above separately from the second job information, and deliver the second job information with the third job information added thereto to the mediation apparatus 200, thereby making the second job information specialized for describing the specific processing. Therefore, the information collection apparatus 100 can make the second job information that describes the specific processing of, for example, causing the firmware of the device 210 to be updated, shared among the plurality of mediation apparatuses 200, that is, the information collection apparatus 100 can commonly apply the second job information to the plurality of mediation apparatuses 200. In addition, with such a configuration, the information collection system 10 can eliminate a need for the mediation apparatus 200 to determine whether sending the result information to the information collection apparatus 100 is included in the specific processing described by the second job information. This allows the information collection system 10 to simplify a system configuration.

FIG. 3 is a flow diagram of an exemplary second information collection method. The flow is started by a mediation apparatus 200 instructing one or more devices 210 connected to the mediation apparatus 200 to send device information together with device IDs and sending these data received from the one or more devices 210 to an information collection apparatus 100. The device information is, for example, the state information mentioned above. It should be noted that the flow is periodically repeated, that is, the mediation apparatus 200 periodically collects the device information on the device 210 and provides it to the information collection apparatus 100.

The information collection apparatus 100 receives the device information through one or more mediation apparatuses 200 (step S201). As mentioned above, in the information collection apparatus 100 in the present embodiment, a communication unit 110 receives the device information together with device IDs of the one or more devices 210.

The information collection apparatus 100 distributes update information received from the one or more mediation apparatuses 200 to one or more provider apparatuses 300 (step S203). More specifically, a conversion unit 120 of the information collection apparatus 100 converts the device information into the update information in a manner unique to each of the one or more provider apparatuses 300, among a plurality of provider apparatuses 300, that manage the device 210 corresponding to the device information received in the step S201. More specifically, the conversion unit 120 specifies, by referring to a storage unit 130, one or more provider apparatus IDs linked to the device IDs received by the communication unit 110, as the one or more provider apparatuses 300.

The conversion unit 120 further distributes the update information to the one or more provider apparatuses 300. More specifically, the conversion unit 120 distributes the device IDs and the update information to the one or more provider apparatuses 300 corresponding to the one or more provider apparatus IDs that have been specified, through the communication unit 110.

As a more specific example of the step S201 to the step S203, a WebAPI of the information collection apparatus 100 simultaneously distribute, to predetermined provider apparatus IDs, the state information and the device IDs of the devices that are periodically POSTed from the one or more mediation apparatuses 200 with an endpoint of post /status/:deviceid designated. The mediation apparatus 200 uses an API-KEY for access when POSTing the data described above to the WebAPI. By authenticating the API-KEY, the WebAPI specifies a preregistered customer ID, and unilaterally simultaneously distributes the update information obtained at post /status/:deviceid to the one or more provider apparatuses 300 with which a customer 410 has a contract.

The provider apparatus 300 sends the device IDs and the update information received from the information collection apparatus 100 to a customer terminal 400 of a customer ID linked to the device IDs, and the flow ends. It should be noted that, in response to the customer 410 requesting, through the customer terminal 400, to view the update information, the provider apparatus 300 may allow the customer 410 to view the update information on the Web.

In the embodiment described above, each of the provider apparatuses 300 may retain the update information on each of the devices 210 as information to be managed for each customer 410, so that the customer 410 can view it at any time. At that time, each of the provider apparatuses 300 receives the customer ID from the customer terminal 400 of the customer 410 and collates it with the customer ID linked to the update information on each of the devices 210, so that each customer 410 can view only information on the device 210 handled by himself/herself.

Here, as a comparative example with an information collection system 10 in the present embodiment, a system is assumed which includes a provision apparatus which provides, in order for a user to remotely manage a device, a service of: presenting, to the user, status information on the device periodically received from a mediation apparatus connected to the device; sending, to the mediation apparatus, a command being based on an input of the user; or presenting, to the user, a result of execution of the command received from the mediation apparatus. The provision apparatus sends and receives information to and from the mediation apparatus in a unique manner through its own API.

When there are a plurality of provision apparatuses managed by a plurality of service providers, the manner will also be of great variety. In such a case, the user may attempt to utilize the plurality of provision apparatuses at the same time, or to switch from one provision apparatus to another provision apparatus. However, in order for the device to be managed by the user or the mediation apparatus connected to the device to bidirectionally communicate with a new provision apparatus, it is necessary to reset, for example, a firewall for each provision apparatus. In addition, the user needs to individually register an ID of the device to be managed by the user, an ID of the mediation apparatus connected to the device, or the like, for each provision apparatus. In addition, when, despite of managing the same device through the same mediation apparatus, the plurality of provision apparatuses do not synchronize the device information on the device with each other, they cannot correctly manage the device.

In contrast, according to the information collection system 10 in the present embodiment, even if there are a plurality of provider apparatuses 300, each of which sends and receives data in a unique manner, the information collection apparatus 100 sends and receives the data to and from each of the provider apparatuses 300 in the unique manner, and on the other hand, sends and receives the data to and from each of the mediation apparatuses 200 in a manner such that any mediation apparatus 200 can recognize it. That is, the information collection apparatus 100 can serve as a bridge between the mediation apparatus 200 and the provider apparatus 300, and play a role of converting data received from one apparatus into data that can be handled by another apparatus and delivering the converted data. In addition, the information collection apparatus 100 simultaneously distributes the data received from the mediation apparatus 200 to the plurality of provider apparatuses 300 with which the customer 410 has a contract, and synchronizes the data. Therefore, the information collection apparatus 100 can solve a problem in the comparative example mentioned above.

In addition, the information collection apparatus 100 sends information on each of the devices 210 obtained through the mediation apparatus 200 to the plurality of provider apparatuses 300 as the information to be managed for each customer 410. Therefore, according to the information collection apparatus 100, a system can be constructed with easy setting, which allows the customer 410 to view the information on each of the devices 210 on the provider apparatus 300 providing a desired service. In addition, according to the information collection apparatus 100, the plurality of provider apparatuses 300 providing the service to the customer 410 can serve as a hub for remote maintenance of the device 210 owned by the customer 410. In addition, according to the information collection apparatus 100, new addition and deletion of a supporting provider apparatus 300 can also be set in a simple way on a customer 410-by-customer 410 basis.

In the embodiment described above, the mediation apparatus 200 has been described as having a configuration in which second job information being based on first job information generated by the one or more provider apparatuses 300 is obtained from the information collection apparatus 100 through a communication network 50. In addition, the second job information has been described as describing the specific processing in a manner such that at least the mediation apparatus 200 can recognize it. Here, in a more specific example, the mediation apparatus 200 may interpret the second job information, download an update file from a specific URL added to the second job information as part of the specific processing executed by the mediation apparatus 200 itself, and send the update file to the device 210.

When the information collection apparatus 100 sends the update file to the mediation apparatus 200 through the communication network 50 and the firewall, if there are many kinds of mediation apparatuses 200 or devices 210, it will be necessary to send different update files depending on these kinds, and also an update file of a relatively large capacity will be sent to each of the mediation apparatuses 200 or each of the devices 210, so there is a possibility that a predetermined upper limit of communication volume will be reached. Therefore, when the mediation apparatus 200 is provided in a LAN 250 protected by the firewall, it is preferable that the information collection apparatus 100 sends the second job information with the URL mentioned above added thereto to the mediation apparatus 200, and the mediation apparatus 200 downloads the update file from the URL, thereby avoiding the problem. It should be noted that the URL may be designated by the information collection apparatus 100, the provider apparatus 300, or the like.

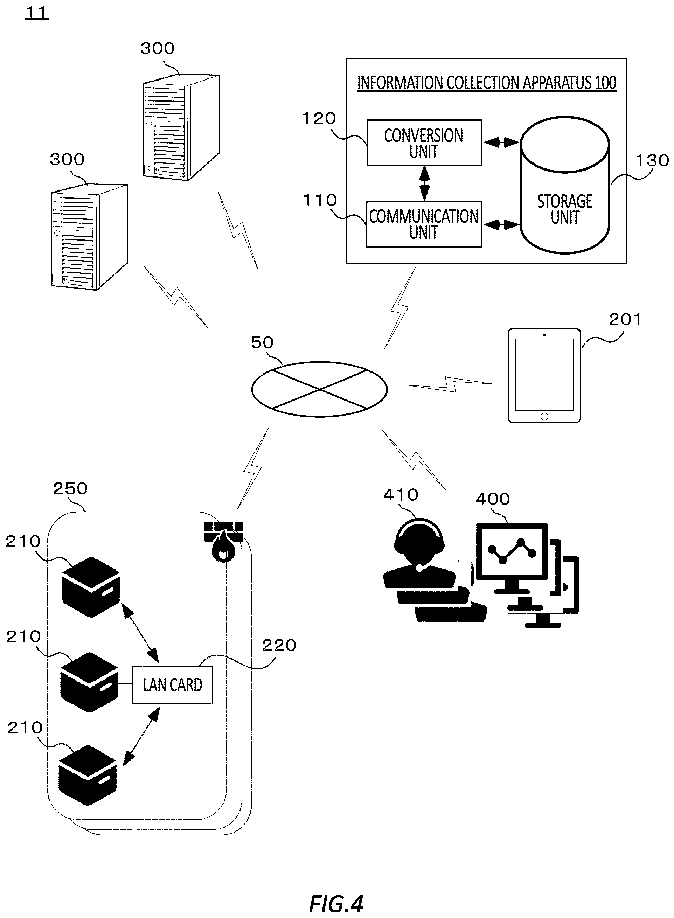

FIG. 4 is a schematic view of an information collection system 11. The information collection system 11 in the present embodiment is different from the information collection system 10 described by using FIG. 1 to FIG. 3 in that a mediation apparatus 201 is not placed in a LAN 250 being under the management of a customer 410, and communicates with a LAN card 220 placed in the LAN 250 through a communication network 50. The mediation apparatus 201 is placed in a center (cloud), for example. Other than this point, the information collection system 11 in the present embodiment is the same as the information collection system 10, so the same reference numerals will be used for configurations corresponding to configurations in the information collection system 10, and repeated description will be omitted.

In the present embodiment, a plurality of customers 410 use the same mediation apparatus 201. That is, one mediation apparatus 201 communicates with LAN cards 220 being in LANs 250 of the plurality of customers 410. Such a manner may be referred to as a single-board manner.

The mediation apparatus 201 retains an API-KEY designated for each of the customers 410, and selects one from among a plurality of API-KEYs to access an information collection apparatus 100. As a more specific example of the present embodiment, the LAN card 220 is attached to one of one or more devices 210 placed in the LAN 250. The LAN card 220 uses a data format called XML, and includes a communication function going beyond a firewall.

The mediation apparatus 201 is periodically polled from a plurality of LAN cards 220. At this time, the LAN cards 220 access the mediation apparatus 201 by using basic authentication of USERNAME and PASSWORD. The mediation apparatus 201 converts XML format data of the LAN cards 220 into a JSON format data (format conversion), and accesses a WebAPI of the information collection apparatus 100. At that time, the mediation apparatus 201 generates, from USERNAME and PASSWORD of the LAN card 220 set for each of the customers 410, an API-KEY corresponding to the customer 410, and accesses the information collection apparatus 100 by using the API-KEY.

The information collection system 11 in the present embodiment also has an effect similar to that of the information collection system 10 described by using FIG. 1 to FIG. 3.

In the plurality of embodiments described above, the information collection apparatus 100 has been described as simultaneously distributing update information to one or more provider apparatuses 300 with which the customer 410 has a contract. In these embodiments, it can be said that at least any one of the one or more devices 210 and one or more mediation apparatuses 200 is associated with a plurality of provider apparatuses 300 in a one-to-multiple relationship. In this case, a communication unit 110 of the information collection apparatus 100 receives, from the one or more mediation apparatuses 200, result information indicating a result of a target caused to execute a specific processing executing the specific processing in accordance with second job information. The conversion unit 120 converts the result information into the update information in a manner unique to each of the plurality of provider apparatuses 300 associated with at least any one of the one or more devices 210 and the one or more mediation apparatuses 200, and simultaneously distributes the update information to the plurality of provider apparatuses 300.

Various embodiments of the present invention may be described with reference to flowcharts and block diagrams, where blocks may represent (1) stages of processes in which operations are executed or (2) sections of apparatuses responsible for executing operations. Certain stages and sections may be implemented by dedicated circuit, programmable circuit supplied together with computer readable instructions stored on computer readable media, and/or processors supplied together with computer readable instructions stored on computer readable media. Dedicated circuit may include digital and/or analog hardware circuits, and may include integrated circuits (IC) and/or discrete circuits. The programmable circuit may include a reconfigurable hardware circuit including logical AND, logical OR, logical XOR, logical NAND, logical NOR, and other logical operations, a memory element or the like such as a flip-flop, a register, a field programmable gate array (FPGA) and a programmable logic array (PLA), or the like.

A computer readable medium may include any tangible device that can store instructions to be executed by a suitable device, and as a result, the computer readable medium having instructions stored thereon includes a product including instructions that can be executed in order to create means for executing operations designated in the flowcharts or block diagrams. Examples of the computer readable medium may include an electronic storage medium, a magnetic storage medium, an optical storage medium, an electromagnetic storage medium, a semiconductor storage medium, and the like. More specific examples of the computer readable medium may include a floppy (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disk (DVD), a Blu-ray (registered trademark) disk, a memory stick, an integrated circuit card, or the like.

The computer readable instruction may include: an assembler instruction, an instruction-set-architecture (ISA) instruction; a machine instruction; a machine dependent instruction; a microcode; a firmware instruction; state-setting data; or either a source code or an object code described in any combination of one or more programming languages, including an object oriented programming language such as Smalltalk (registered trademark), JAVA (registered trademark), C++, or the like, and a conventional procedural programming language such as a "C" programming language or a similar programming language.

Computer readable instructions may be provided to a processor of a general-purpose computer, special purpose computer, or other programmable data processing apparatuses, or to programmable circuit, locally or through a local area network (LAN), wide area network (WAN) such as the Internet, or the like, so that the computer readable instructions are executed in order to create means for executing operations designated in the flowcharts or block diagrams. Examples of the processor include a computer processor, a processing unit, a microprocessor, a digital signal processor, a controller, a microcontroller, and the like.

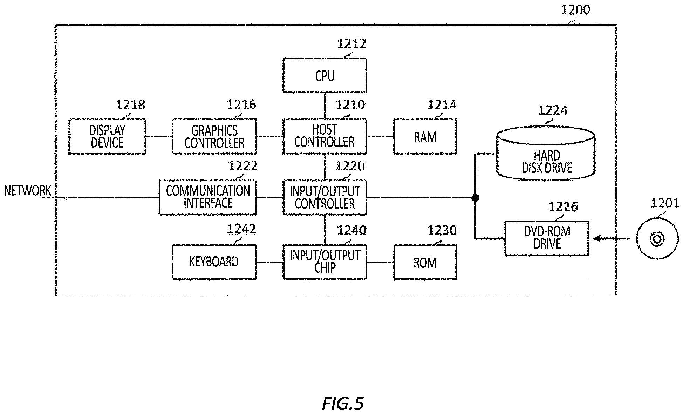

FIG. 5 shows an example of a computer 1200 in which a plurality of aspects of the present invention may be entirely or partially embodied. A program installed on the computer 1200 can cause the computer 1200 to function as an operation associated with an apparatus according to embodiments of the present invention or as one or more "unit(s)" of the apparatus, or to execute the operation or the one or more "unit(s)", and/or can cause the computer 1200 to execute processes according to embodiments of the present invention or stages of the processes. Such a program may be executed by a CPU 1212 to cause the computer 1200 to execute certain operations associated with some or all blocks in the flowcharts or block diagrams described in the present specification.

The computer 1200 according to the present embodiment includes a CPU 1212, a RAM 1214, a graphics controller 1216 and a display device 1218, which are connected to each other by a host controller 1210. The computer 1200 also includes input/output units such as a communication interface 1222, a hard disk drive 1224, a DVD-ROM drive 1226 and an IC card drive, which are connected to the host controller 1210 through an input/output controller 1220. The computer also includes legacy input/output units such as a ROM 1230 and a keyboard 1242, which are connected to the input/output controller 1220 through an input/output chip 1240.

The CPU 1212 operates in accordance with programs stored in the ROM 1230 and the RAM 1214, thereby controlling each unit. The graphics controller 1216 obtains image data generated by the CPU 1212 on a frame buffer or the like provided in the RAM 1214 or in the graphics controller 1216 itself, and displays the image data on the display device 1218.

The communication interface 1222 communicates with other electronic devices through a network. The hard disk drive 1224 stores programs and data to be used by the CPU 1212 in the computer 1200. The DVD-ROM drive 1226 reads programs or data from the DVD-ROM 1201, and provides the programs or data to the hard disk drive 1224 through the RAM 1214. The IC card drive reads the program and data from an IC card, and/or writes the program and data to the IC card.

The ROM 1230 has stored therein a boot program or the like to be executed by the computer 1200 at the time of activation, and/or a program that depends on the hardware of the computer 1200. The input/output chip 1240 may also connect various input/output units to the input/output controller 1220 through a parallel port, a serial port, a keyboard port, a mouse port or the like.

Programs are provided by a computer readable storage medium such as the DVD-ROM 1201 or an IC card. The programs are read from the computer readable storage medium, installed on the hard disk drive 1224, the RAM 1214 or the ROM 1230, which are also examples of a computer readable storage medium, and executed by the CPU 1212. Information processing described in these programs is read by the computer 1200, and provides cooperation between the programs and the various types of hardware resources described above. An apparatus or method may be constituted by realizing the operation or processing of information in accordance with the usage of the computer 1200.

For example, if a communication is executed between the computer 1200 and external devices, the CPU 1212 may execute a communication program loaded on the RAM 1214, and instruct the communication interface 1222 to perform communication process based on the process described in the communication program. Under the control of the CPU 1212, the communication interface 1222 reads send data stored in a send buffer region provided in a recording medium such as the RAM 1214, the hard disk drive 1224, the DVD-ROM 1201 or an IC card, and sends the read send data to the network, or writes reception data received from the network into a reception buffer region or the like provided in the recording medium.

In addition, the CPU 1212 may also make all or required portions of the files or databases stored in an external recording medium such as the hard disk drive 1224, the DVD-ROM drive 1226 (DVD-ROM 1201), an IC card, or the like to be read by the RAM 1214, and execute various types of processing on the data on the RAM 1214. Next, the CPU 1212 may write the processed data back in the external recording medium.

Various types of information such as various types of programs, data, tables and databases may be stored in the recording medium for information processing. The CPU 1212 may execute, on the data read from the RAM 1214, various types of processing including various types of operations, information processing, conditional judgement, conditional branching, unconditional branching, information search/replacement, or the like described throughout the present disclosure and designated by instruction sequences of the programs, to write the results back to the RAM 1214. In addition, the CPU 1212 may search for information in a file, a database, or the like in the recording medium. For example, when a plurality of entries, each having an attribute value of a first attribute associated with an attribute value of a second attribute, are stored in the recording medium, the CPU 1212 may search the plurality of entries for an entry whose attribute value of the first attribute matches a designated condition, and read the attribute value of the second attribute stored in the entry, thereby obtaining the attribute value of the second attribute associated with the first attribute that meets a predetermined condition.

The programs or software modules in the above description may be stored on the computer 1200 or a computer readable storage medium near the computer 1200. In addition, a recording medium such as a hard disk or a RAM provided in a server system connected to a dedicated communication network or the Internet can be used as a computer readable storage media, thereby providing programs to the computer 1200 through the network.

While the present invention has been described by way of the embodiments, the technical scope of the present invention is not limited to the above-described embodiments. It is apparent to persons skilled in the art that various alterations or improvements can be made to the above-described embodiments. In addition, the matters described with regard to the particular embodiment can be applied to other embodiments with a range without causing technical contradictions. In addition, each constitutional element may have features similar to those of other constitutional elements which have the same name and have the different numerals. It is also apparent from the described scope of the claims that the embodiments added with such alterations or improvements can be included the technical scope of the present invention.

The operations, procedures, steps, stages, or the like of each process performed by a device, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

10, 11: information collection system;
50: communication network;
100: information collection apparatus;
110: communication unit;
120: conversion unit;
130: storage unit;
200, 201: mediation apparatus;
210: device;
220: LAN card;
250: LAN;
300: provider apparatus;
400: customer terminal;
410: customer;
1200: computer;
1201: DVD-ROM;
1210: host controller;
1212: CPU;
1214: RAM;
1216: graphics controller;
1218: display device;
1220: input/output controller;
1222: communication interface;
1224: hard disk drive;
1226: DVD-ROM drive;
1230: ROM;
1240: input/output chip; and
1242: keyboard.

## Claims

1. An information collection apparatus (100) which collects information on one or more devices (210) through one or more mediation apparatuses (200), the information collection apparatus (100) comprising:
a communication unit (110) which receives, from a plurality of provider apparatuses (300) that provide a customer (410) with a service of managing the one or more devices (210), first job information describing, in a manner unique to each of the plurality of provider apparatuses (300), a specific processing that a target is caused to execute, the target including both the one or more mediation apparatuses (200) and the one or more devices (210), or only the one or more mediation apparatuses (200); and
a conversion unit (120) which converts the first job information received by the communication unit (110) into second job information describing the specific processing that the target is caused to execute in a manner such that the one or more mediation apparatuses (200) can recognize it, and delivers the second job information to the one or more mediation apparatuses (200) through the communication unit (110), wherein
at least any one of the one or more devices (210) and the one or more mediation apparatuses (200) is associated with the plurality of provider apparatuses (300) in a one-to-multiple relationship,
the communication unit (110) receives result information indicating a result of the target executing the specific processing in accordance with the second job information, from the one or more mediation apparatuses (200), and
the conversion unit (120) converts the result information into update information in the manner unique to each of the plurality of provider apparatuses (300) associated with the at least any one, and distributes the update information simultaneously to the plurality of provider apparatuses (300) associated with the at least any one.

2. The information collection apparatus (100) according to claim 1, wherein
the conversion unit (120) delivers third job information that describes a processing of causing result information indicating a result of the target executing the specific processing in accordance with the second job information to be returned to the information collection apparatus (100), in a manner such that the one or more mediation apparatuses (200) can recognize it, to the one or more mediation apparatuses (200) through the communication unit (110) together with the second job information.

3. The information collection apparatus (100) according to 1 or 2, wherein
the communication unit (110) receives, from the plurality of provider apparatuses (300) together with the first job information, a customer ID of a customer (410) who is managing a device (210) caused to execute the specific processing based on the first job information, and
the conversion unit (120) links the second job information to the customer ID received by the communication unit (110).

4. The information collection apparatus (100) according to claim 3, further comprising a storage unit (130) which stores, in a mutually linked manner, an API-KEY of each of the one or more mediation apparatuses (200) and a customer ID of each of one or more customers (410) provided with the service from the plurality of provider apparatuses (300), wherein
the conversion unit (120)
specifies, by referring to the storage unit (130), a customer ID corresponding to an API-KEY presented by the one or more mediation apparatuses (200) requesting reception and delivery of the second job information, and
when the customer ID corresponding to the API-KEY matches the customer ID linked to the second job information, delivers the second job information to the one or more mediation apparatuses (200) requesting the reception and delivery of the second job information, through the communication unit (110).

5. The information collection apparatus (100) according to claim 4, wherein
the communication unit (110) receives, from the plurality of provider apparatuses (300) together with the first job information and the customer ID, a device ID of a device (210) caused to execute the specific processing based on the second job information corresponding to the first job information, and
the conversion unit (120)
links the second job information to the customer ID and the device ID received by the communication unit (110), and
when the customer ID corresponding to the API-KEY matches the customer ID linked to the second job information, delivers the second job information to the one or more mediation apparatuses (200) requesting the reception and delivery of the second job information, through the communication unit (110) together with the device ID.

6. The information collection apparatus (100) according to claim 4 or 5, wherein
the storage unit (130) stores, in a mutually linked manner, a provider apparatus ID of each of the plurality of provider apparatuses (300) and a device ID of each of the one or more devices (210),
the communication unit (110) receives result information indicating a result of a device (210) connected to the one or more mediation apparatuses (200) to which the second job information has been delivered executing the specific processing in accordance with the second job information, from the one or more mediation apparatuses (200) to which the second job information has been delivered, together with the device ID of the device (210) that has executed the specific processing, and
the conversion unit (120)
specifies, by referring to the storage unit (130), one or more provider apparatus IDs including the provider apparatus ID that are linked to the device ID received by the communication unit (110),
converts the result information into update information in a manner unique to each of one or more provider apparatuses (300) corresponding to the one or more provider apparatus IDs including the provider apparatus ID, and
distributes the device ID and the update information to the one or more provider apparatuses (300) corresponding to the one or more provider apparatus IDs including the provider apparatus ID through the communication unit (110).

7. The information collection apparatus (100) according to claim 1, wherein
the communication unit (110) receives, from the one or more devices (210) to be managed, device information on the one or more devices (210) through the one or more mediation apparatuses (200); and
the conversion unit (120) converts the device information into update information in a manner unique to each of one or more provider apparatuses (300), among a plurality of provider apparatuses (300) that provide a customer (410) with a service of managing one or more devices (210) through one or more mediation apparatuses (200), that manage the one or more devices (210) corresponding to the device information received by the communication unit (110), and distributes the update information to the one or more provider apparatuses (300) through the communication unit (110).

8. The information collection apparatus (100) according to claim 7, further comprising a storage unit (130) which stores, in a mutually linked manner, a device ID of each of the one or more devices (210) and a provider apparatus ID of each of the plurality of provider apparatuses (300), wherein
the communication unit (110) receives the device information from the one or more devices (210) together with the device ID, and
the conversion unit (120) specifies, by referring to the storage unit (130), one or more provider apparatus IDs including the provider apparatus ID that are linked to the device ID received by the communication unit (110), and distributes the device ID and the update information to one or more provider apparatuses (300) corresponding to the one or more provider apparatus IDs including the provider apparatus ID through the communication unit (110).

9. The information collection apparatus (100) according to any one of claims 1 to 8, wherein the manner unique to each of the plurality of provider apparatuses (300) is one of script designation via a remote shell (rsh), script designation via a secure shell (SSH), or script designation through email automatic processing.

10. An information collection method for collecting information on one or more devices (210) through one or more mediation apparatuses (200), the information collection method comprising:
performing reception by receiving, from a plurality of provider apparatuses (300) that provide a customer (410) with a service of managing the one or more devices (210), first job information describing, in a manner unique to each of the plurality of provider apparatuses (300), a specific processing that a target is caused to execute, the target including both the one or more mediation apparatuses (200) and the one or more devices (210), or only the one or more mediation apparatuses (200); and
performing conversion by converting the first job information received in the performing the reception into second job information describing the specific processing that the target is caused to execute in a manner such that the one or more mediation apparatuses (200) can recognize it, and by delivering the second job information to the one or more mediation apparatuses (200), wherein
at least any one of the one or more devices (210) and the one or more mediation apparatuses (200) is associated with the plurality of provider apparatuses (300) in a one-to-multiple relationship,
the information collection method further comprising:
receiving result information indicating a result of the target executing the specific processing in accordance with the second job information, from the one or more mediation apparatuses (200), and
converting the result information into update information in the manner unique to each of the plurality of provider apparatuses (300) associated with the at least any one, and distributing the update information simultaneously to the plurality of provider apparatuses (300) associated with the at least any one.

11. The information collection method according to claim 10, further comprising:
performing another reception by receiving, through the one or more mediation apparatuses (200), device information on the one or more devices (210) to be managed; and
performing another conversion by converting the device information into update information in a manner unique to each of one or more provider apparatuses (300), among a plurality of provider apparatuses (300) that provide a customer (410) with a service of managing the one or more devices (210) through the one or more mediation apparatuses (200), that manage the one or more devices (210) corresponding to the device information received in the performing the another reception, and by distributing the update information to the one or more provider apparatuses (300).

12. A computer program that, when executed by a computer, causes the computer to execute an information collection method for collecting information on one or more devices (210) through one or more mediation apparatuses (200), the information collection method comprising:
receiving, from a plurality of provider apparatuses (300) that provide a customer (410) with a service of managing the one or more devices (210), first job information describing, in a manner unique to each of the plurality of provider apparatuses (300), a specific processing that a target is caused to execute, the target including both the one or more mediation apparatuses (200) and the one or more devices (210), or only the one or more mediation apparatuses (200); and
performing conversion by converting the first job information received in the receiving into second job information describing the specific processing that the target is caused to execute in a manner such that the one or more mediation apparatuses (200) can recognize it, and by delivering the second job information to the one or more mediation apparatuses (200), wherein
at least any one of the one or more devices (210) and the one or more mediation apparatuses (200) is associated with the plurality of provider apparatuses (300) in a one-to-multiple relationship,
the information collection method further comprising:
receiving result information indicating a result of the target executing the specific processing in accordance with the second job information, from the one or more mediation apparatuses (200), and
converting the result information into update information in the manner unique to each of the plurality of provider apparatuses (300) associated with the at least any one, and distributing the update information simultaneously to the plurality of provider apparatuses (300) associated with the at least any one.

13. The computer program according to claim 12, wherein
the information collection method further comprises:
performing another reception by receiving, through the one or more mediation apparatuses (200), device information on the one or more devices (210) to be managed; and
performing another conversion by converting the device information into update information in a manner unique to each of one or more provider apparatuses (300), among a plurality of provider apparatuses (300) that provide a customer (410) with a service of managing one or more devices (210) through one or more mediation apparatuses (200), that manage the one or more devices (210) corresponding to the device information received in the performing the another reception, and by distributing the update information to the one or more provider apparatuses (300).

## Patentansprüche

1. Informationssammelvorrichtung (100), die Informationen über eine oder mehrere Vorrichtungen (210) durch eine oder mehrere Vermittlungsvorrichtungen (200) sammelt, wobei die Informationssammelvorrichtung (100) Folgendes aufweist:
eine Kommunikationseinheit (110), die von mehreren Anbietervorrichtungen (300), die einem Kunden (410) einen Dienst zum Verwalten der einen oder mehreren Vorrichtungen (210) bereitstellen, erste Auftragsinformationen empfängt, die auf eine für jede der mehreren Anbietervorrichtungen (300) eindeutige Weise eine spezifische Verarbeitung beschreiben, zu deren Ausführung ein Ziel veranlasst wird, wobei das Ziel sowohl die eine oder mehreren Vermittlungsvorrichtungen (200) als auch die eine oder mehreren Vorrichtungen (210) oder nur die eine oder mehreren Vermittlungsvorrichtungen (200) enthält; und
eine Umwandlungseinheit (120), die die durch die Kommunikationseinheit (110) empfangenen ersten Auftragsinformationen in zweite Auftragsinformationen umwandelt, die die spezifische Verarbeitung beschreiben, zu deren Ausführung das Ziel auf eine Weise veranlasst wird, dass die eine oder mehreren Vermittlungsvorrichtungen (200) es erkennen können, und die zweiten Auftragsinformationen durch die Kommunikationseinheit (110) an die eine oder mehreren Vermittlungsvorrichtungen (200) liefert, wobei
mindestens eine der einen oder mehreren Vorrichtungen (210) und die eine oder mehreren Vermittlungsvorrichtungen (200) den mehreren Anbietervorrichtungen (300) in einer Eins-zu-Vielfachen-Beziehung zugeordnet sind,
die Kommunikationseinheit (110) Ergebnisinformationen, die ein Ergebnis des Ziels angeben, das die spezifische Verarbeitung gemäß den zweiten Auftragsinformationen ausführt, von der einen oder den mehreren Vermittlungsvorrichtungen (200) empfängt, und
die Umwandlungseinheit (120) die Ergebnisinformationen auf die für jede der mehreren Anbietervorrichtungen (300), die der mindestens einen zugeordnet sind, eindeutige Weise in Aktualisierungsinformationen umwandelt und die Aktualisierungsinformationen gleichzeitig an die mehreren Anbietervorrichtungen (300), die der mindestens einen zugeordnet sind, verteilt.

2. Informationssammelvorrichtung (100) nach Anspruch 1, wobei
die Umwandlungseinheit (120) dritte Auftragsinformationen, die eine Verarbeitung zum Veranlassen, dass Ergebnisinformationen, die ein Ergebnis des Ziels angeben, das die spezifische Verarbeitung gemäß den zweiten Auftragsinformationen ausführt, an die Informationssammelvorrichtung (100) zurückgegeben werden, auf eine Weise, dass die eine oder mehreren Vermittlungsvorrichtungen (200) es erkennen können, an die eine oder mehreren Vermittlungsvorrichtungen (200) durch die Kommunikationseinheit (110) zusammen mit den zweiten Auftragsinformationen liefert.

3. Informationssammelvorrichtung (100) nach Anspruch 1 oder 2, wobei
die Kommunikationseinheit (110) von den mehreren Anbietervorrichtungen (300) zusammen mit den ersten Auftragsinformationen eine Kunden-ID eines Kunden (410) empfängt, der eine Vorrichtung (210) verwaltet, die veranlasst wird, die spezifische Verarbeitung basierend auf den ersten Auftragsinformationen auszuführen, und
die Umwandlungseinheit (120) die zweiten Auftragsinformationen mit der durch die Kommunikationseinheit (110) empfangenen Kunden-ID verknüpft.

4. Informationssammelvorrichtung (100) nach Anspruch 3, die ferner eine Speichereinheit (130) aufweist, die auf eine miteinander verknüpfte Weise einen API-Schlüssel jeder der einen oder mehreren Vermittlungsvorrichtungen (200) und eine Kunden-ID jedes von einem oder mehreren Kunden (410) speichert, die mit dem Dienst von den mehreren Anbietervorrichtungen (300) versorgt werden, wobei
die Umwandlungseinheit (120)
unter Bezugnahme auf die Speichereinheit (130) eine Kunden-ID spezifiziert, die einem API-Schlüssel entspricht, der durch die eine oder die mehreren Vermittlungsvorrichtungen (200) präsentiert wird, die den Empfang und die Lieferung der zweiten Auftragsinformationen anfordern, und
wenn die Kunden-ID, die dem API-Schlüssel entspricht, mit der Kunden-ID übereinstimmt, die mit den zweiten Auftragsinformationen verknüpft ist, die zweiten Auftragsinformationen durch die Kommunikationseinheit (110) an die eine oder mehreren Vermittlungsvorrichtungen (200) liefert, die den Empfang und die Lieferung der zweiten Auftragsinformationen anfordern.

5. Informationssammelvorrichtung (100) nach Anspruch 4, wobei
die Kommunikationseinheit (110) von den mehreren Anbietervorrichtungen (300) zusammen mit den ersten Auftragsinformationen und der Kunden-ID eine Vorrichtungs-ID einer Vorrichtung (210) empfängt, die veranlasst wird, die spezifische Verarbeitung basierend auf den zweiten Auftragsinformationen auszuführen, die den ersten Auftragsinformationen entsprechen, und
die Umwandlungseinheit (120)
die zweiten Auftragsinformationen mit der Kunden-ID und der Vorrichtungs-ID verknüpft, die durch die Kommunikationseinheit (110) empfangen werden, und
wenn die Kunden-ID, die dem API-Schlüssel entspricht, mit der Kunden-ID übereinstimmt, die mit den zweiten Auftragsinformationen verknüpft ist, die zweiten Auftragsinformationen durch die Kommunikationseinheit (110) zusammen mit der Vorrichtungs-ID an die eine oder mehreren Vermittlungsvorrichtungen (200) liefert, die den Empfang und die Lieferung der zweiten Auftragsinformationen anfordern.

6. Informationssammelvorrichtung (100) nach Anspruch 4 oder 5, wobei
die Speichereinheit (130) auf eine miteinander verknüpfte Weise eine Anbietervorrichtungs-ID jeder der mehreren Anbietervorrichtungen (300) und eine Vorrichtungs-ID jeder der einen oder mehreren Vorrichtungen (210) speichert,
die Kommunikationseinheit (110) Ergebnisinformationen, die ein Ergebnis einer Vorrichtung (210) angeben, die mit der einen oder den mehreren Vermittlungsvorrichtungen (200) verbunden ist, an die die zweiten Auftragsinformationen geliefert wurden, die die spezifische Verarbeitung gemäß den zweiten Auftragsinformationen ausführen, von der einen oder den mehreren Vermittlungsvorrichtungen (200), an die die zweiten Auftragsinformationen geliefert wurden, zusammen mit der Vorrichtungs-ID der Vorrichtung (210) empfängt, die die spezifische Verarbeitung ausgeführt hat, und
die Umwandlungseinheit (120)
unter Bezugnahme auf die Speichereinheit (130) eine oder mehrere Anbietervorrichtungs-IDs spezifiziert, die die Anbietervorrichtungs-ID enthalten, die mit der Vorrichtungs-ID verknüpft sind, die durch die Kommunikationseinheit (110) empfangen wird,
die Ergebnisinformationen auf eine für jede der einen oder mehreren Anbietervorrichtungen (300), die der einen oder den mehreren Anbietervorrichtungs-IDs entsprechen, die die Anbietervorrichtungs-ID enthalten, eindeutige Weise in Aktualisierungsinformationen umwandelt und
die Vorrichtungs-ID und die Aktualisierungsinformationen über die Kommunikationseinheit (110) an die eine oder die mehreren Anbietervorrichtungen (300) verteilt, die der einen oder den mehreren Anbietervorrichtungs-IDs entsprechen, die die Anbietervorrichtungs-ID enthalten.

7. Informationssammelvorrichtung (100) nach Anspruch 1, wobei
die Kommunikationseinheit (110) von der einen oder den mehreren zu verwaltenden Vorrichtungen (210) Vorrichtungsinformationen über die eine oder die mehreren Vorrichtungen (210) durch die eine oder die mehreren Vermittlungsvorrichtungen (200) empfängt; und
die Umwandlungseinheit (120) die Vorrichtungsinformationen auf eine für jede der einen oder mehreren Anbietervorrichtungen (300) unter mehreren Anbietervorrichtungen (300), die einem Kunden (410) einen Dienst zum Verwalten einer oder mehrerer Vorrichtungen (210) durch eine oder mehrere Vermittlungsvorrichtungen (200) bereitstellen, die die eine oder die mehreren Vorrichtungen (210) verwalten, die den durch die Kommunikationseinheit (110) empfangenen Vorrichtungsinformationen entsprechen, eindeutige Weise in Aktualisierungsinformationen umwandelt und die Aktualisierungsinformationen über die Kommunikationseinheit (110) an die eine oder die mehreren Anbietervorrichtungen (300) verteilt.

8. Informationssammelvorrichtung (100) nach Anspruch 7, die ferner eine Speichereinheit (130) aufweist, die auf eine miteinander verknüpfte Weise eine Vorrichtungs-ID jeder der einen oder mehreren Vorrichtungen (210) und eine Anbietervorrichtungs-ID jeder der mehreren Anbietervorrichtungen (300) speichert, wobei
die Kommunikationseinheit (110) die Vorrichtungsinformationen von der einen oder den mehreren Vorrichtungen (210) zusammen mit der Vorrichtungs-ID empfängt, und
die Umwandlungseinheit (120) unter Bezugnahme auf die Speichereinheit (130) eine oder mehrere Anbietervorrichtungs-IDs spezifiziert, die die Anbietervorrichtungs-ID enthalten, die mit der Vorrichtungs-ID verknüpft sind, die durch die Kommunikationseinheit (110) empfangen wird, und die Vorrichtungs-ID und die Aktualisierungsinformationen über die Kommunikationseinheit (110) an eine oder mehrere Anbietervorrichtungen (300) verteilt, die der einen oder den mehreren Anbietervorrichtungs-IDs entsprechen, die die Anbietervorrichtungs-ID enthalten.

9. Informationssammelvorrichtung (100) nach einem der Ansprüche 1 bis 8, wobei die Weise, die für jede der mehreren Anbietervorrichtungen (300) eindeutig ist, eine von einer Skriptbezeichnung über eine Remote-Shell (rsh), einer Skriptbezeichnung über eine Secure-Shell (SSH) oder einer Skriptbezeichnung durch automatische E-Mail-Verarbeitung ist.

10. Informationssammelverfahren zum Sammeln von Informationen über eine oder mehrere Vorrichtungen (210) durch eine oder mehrere Vermittlungsvorrichtungen (200), wobei das Informationssammelverfahren Folgendes aufweist:
Durchführen eines Empfangs durch Empfangen, von mehreren Anbietervorrichtungen (300), die einem Kunden (410) einen Dienst zum Verwalten der einen oder mehreren Vorrichtungen (210) bereitstellen, von ersten Auftragsinformationen, die auf eine für jede der mehreren Anbietervorrichtungen (300) eindeutige Weise eine spezifische Verarbeitung beschreiben, zu deren Ausführung ein Ziel veranlasst wird, wobei das Ziel sowohl die eine oder mehreren Vermittlungsvorrichtungen (200) als auch die eine oder mehreren Vorrichtungen (210) oder nur die eine oder mehreren Vermittlungsvorrichtungen (200) enthält; und
Durchführen einer Umwandlung durch Umwandeln der bei dem Durchführen des Empfangs empfangenen ersten Auftragsinformationen in zweite Auftragsinformationen, die die spezifische Verarbeitung beschreiben, zu deren Ausführung das Ziel auf eine Weise veranlasst wird, dass die eine oder mehreren Vermittlungsvorrichtungen (200) es erkennen können, und durch Liefern der zweiten Auftragsinformationen an die eine oder mehreren Vermittlungsvorrichtungen (200), wobei
mindestens eine der einen oder mehreren Vorrichtungen (210) und die eine oder mehreren Vermittlungsvorrichtungen (200) den mehreren Anbietervorrichtungen (300) in einer Eins-zu-Vielfachen-Beziehung zugeordnet sind,
wobei das Informationssammelverfahren ferner Folgendes aufweist:
Empfangen von Ergebnisinformationen, die ein Ergebnis des Ziels angeben, das die spezifische Verarbeitung gemäß den zweiten Auftragsinformationen ausführt, von der einen oder den mehreren Vermittlungsvorrichtungen (200), und
Umwandeln der Ergebnisinformationen auf die für jede der mehreren Anbietervorrichtungen (300), die der mindestens einen zugeordnet sind, eindeutige Weise in Aktualisierungsinformationen und gleichzeitiges Verteilen der Aktualisierungsinformationen an die mehreren Anbietervorrichtungen (300), die der mindestens einen zugeordnet sind.

11. Informationssammelverfahren nach Anspruch 10, das ferner Folgendes aufweist:
Durchführen eines weiteren Empfangs durch Empfangen, durch die eine oder mehreren Vermittlungsvorrichtungen (200), von Vorrichtungsinformationen über die eine oder mehreren zu verwaltenden Vorrichtungen (210); und
Durchführen einer weiteren Umwandlung durch Umwandeln der Vorrichtungsinformationen auf eine für jede der einen oder mehreren Anbietervorrichtungen (300) unter mehreren Anbietervorrichtungen (300), die einem Kunden (410) einen Dienst zum Verwalten der einen oder mehreren Vorrichtungen (210) durch die eine oder mehreren Vermittlungsvorrichtungen (200) bereitstellen, die die eine oder mehreren Vorrichtungen (210) verwalten, die den bei dem Durchführen des weiteren Empfangs empfangenen Vorrichtungsinformationen entsprechen, eindeutige Weise in Aktualisierungsinformationen und durch Verteilen der Aktualisierungsinformationen an die eine oder mehreren Anbietervorrichtungen (300).

12. Computerprogramm, das, wenn es durch einen Computer ausgeführt wird, den Computer veranlasst, ein Informationssammelverfahren zum Sammeln von Informationen über eine oder mehrere Vorrichtungen (210) durch eine oder mehrere Vermittlungsvorrichtungen (200) auszuführen, wobei das Informationssammelverfahren Folgendes aufweist:
Empfangen, von mehreren Anbietervorrichtungen (300), die einem Kunden (410) einen Dienst zum Verwalten der einen oder mehreren Vorrichtungen (210) bereitstellen, von ersten Auftragsinformationen, die auf eine für jede der mehreren Anbietervorrichtungen (300) eindeutige Weise eine spezifische Verarbeitung beschreiben, zu deren Ausführung ein Ziel veranlasst wird, wobei das Ziel sowohl die eine oder mehreren Vermittlungsvorrichtungen (200) als auch die eine oder mehreren Vorrichtungen (210) oder nur die eine oder mehreren Vermittlungsvorrichtungen (200) enthält; und
Durchführen einer Umwandlung durch Umwandeln der bei dem Empfangen empfangenen ersten Auftragsinformationen in zweite Auftragsinformationen, die die spezifische Verarbeitung beschreiben, zu deren Ausführung das Ziel auf eine Weise veranlasst wird, dass die eine oder mehreren Vermittlungsvorrichtungen (200) es erkennen können, und durch Liefern der zweiten Auftragsinformationen an die eine oder mehreren Vermittlungsvorrichtungen (200), wobei
mindestens eine der einen oder mehreren Vorrichtungen (210) und die eine oder mehreren Vermittlungsvorrichtungen (200) den mehreren Anbietervorrichtungen (300) in einer Eins-zu-Vielfachen-Beziehung zugeordnet sind,
wobei das Informationssammelverfahren ferner Folgendes aufweist:
Empfangen von Ergebnisinformationen, die ein Ergebnis des Ziels angeben, das die spezifische Verarbeitung gemäß den zweiten Auftragsinformationen ausführt, von der einen oder den mehreren Vermittlungsvorrichtungen (200), und
Umwandeln der Ergebnisinformationen auf die für jede der mehreren Anbietervorrichtungen (300), die der mindestens einen zugeordnet sind, eindeutige Weise in Aktualisierungsinformationen und gleichzeitiges Verteilen der Aktualisierungsinformationen an die mehreren Anbietervorrichtungen (300), die der mindestens einen zugeordnet sind.

13. Computerprogramm nach Anspruch 12, wobei
das Informationssammelverfahren ferner Folgendes aufweist:
Durchführen eines weiteren Empfangs durch Empfangen, durch die eine oder mehreren Vermittlungsvorrichtungen (200), von Vorrichtungsinformationen über die eine oder mehreren zu verwaltenden Vorrichtungen (210); und
Durchführen einer weiteren Umwandlung durch Umwandeln der Vorrichtungsinformationen auf eine für jede der einen oder mehreren Anbietervorrichtungen (300) unter mehreren Anbietervorrichtungen (300), die einem Kunden (410) einen Dienst zum Verwalten einer oder mehrerer Vorrichtungen (210) durch eine oder mehrere Vermittlungsvorrichtungen (200) bereitstellen, die die eine oder mehreren Vorrichtungen (210) verwalten, die den bei dem Durchführen des weiteren Empfangs empfangenen Vorrichtungsinformationen entsprechen, eindeutige Weise in Aktualisierungsinformationen und durch Verteilen der Aktualisierungsinformationen an die eine oder mehreren Anbietervorrichtungen (300).

## Revendications

1. Un appareil de collecte d'information (100) qui collecte de l'information sur un ou de plusieurs dispositifs (210) par l'intermédiaire d'un ou de plusieurs appareils de médiation (200), l'appareil de collecte d'information (100) comprenant :
- une unité de communication (110) qui reçoit, en provenance d'une pluralité d'appareils fournisseurs (300) qui fournissent à un client (410) un service de gestion du ou des dispositifs (210), une première information de travail, décrivant, d'une manière propre à chacun de la pluralité d'appareils fournisseurs (300), un traitement spécifique qu'une cible est amenée à exécuter, la cible comportant à la fois le ou les appareils de médiation (200) et le ou les dispositifs (210), ou seulement le ou les appareils de médiation (200) ; et
- une unité de conversion (120) qui convertit la première information de travail reçue par l'unité de communication (110) en une deuxième information de travail décrivant le traitement spécifique que la cible est amenée à exécuter d'une manière telle que le ou les appareils de médiation (200) peuvent la reconnaître, et délivre la deuxième information de travail à l'appareil ou aux appareils de médiation (200) par l'intermédiaire de l'unité de communication (110), dans lequel
- au moins l'un quelconque parmi le ou les dispositif (210) et le ou les appareils de médiation (200) est associé avec la pluralité des appareils fournisseurs (300) dans une relation de type un-à plusieurs,
- l'unité de communication (110) reçoit de l'information de résultat indiquant un résultat de l'exécution par la cible du traitement spécifique conformément à la deuxième information de travail, en provenance du ou des appareils de médiation (200), et
- l'unité de conversion (120) convertit l'information de résultat en une information mise à jour de la manière propre à chacun de la pluralité d'appareils fournisseurs (300) associé avec ledit au moins un quelconque.

2. L'appareil de collecte d'information (100) selon la revendication 1, dans lequel
- l'unité de conversion (120) délivre une troisième information de travail qui décrit un traitement amenant l'information de résultat indiquant un résultat de la cible exécutant le traitement spécifique conformément à la deuxième information de travail à être retournée à l'appareil de collecte d'information (100), d'une manière telle que le ou les appareils de médiation (200) peuvent la reconnaître, à l'appareil ou aux appareils de médiation (200) par l'intermédiaire de l'unité de communication (110) ainsi que la deuxième information de travail.

3. L'appareil de collecte d'information (100) selon la revendication 1 ou 2, dans lequel
- l'unité de communication (110) reçoit, en provenance de la pluralité d'appareils fournisseurs (300), en compagnie de la première information de travail, un ID client d'un client (410) qui est en train de gérer un dispositif (210) amené à exécuter le traitement spécifique sur la base de la première information de travail, et
- l'unité de conversion (120) lie la deuxième information de travail à l'ID client reçu par l'unité de communication (110).

4. L'appareil de collecte d'information (100) selon la revendication 3, comprenant en outre une unité de stockage (130) qui store, d'une manière liée mutuellement, une clé API de chacun du ou des appareils de médiation (200) et un IC client de chacun du ou des clients (410) fournis par le service en provenance de la pluralité d'appareils fournisseurs (300), dans lequel
l'unité de conversion (120)
- spécifie, en se référant à l'unité de stockage (130), un ID client correspondant à la clé API présentée par le ou les appareils de médiation (200) requérant la réception et la fourniture de la deuxième information de travail, et
- quand l'ID client correspondant à la clé API correspond à l'ID client lié à la deuxième information de travail, délivre la deuxième information de travail à l'appareil ou aux appareils de médiation (200) requérant la réception et la fourniture de la deuxième information de travail, par l'intermédiaire de l'unité de communication (110).

5. L'appareil de collecte d'information (100) selon la revendication 4, dans lequel
- l'unité de communication (110) reçoit, en provenance de la pluralité d'appareils fournisseurs (300) en compagnie de la première information de travail et du ID client, un ID de dispositif d'un dispositif (210) amené à exécuter le traitement spécifique sur la base de la deuxième information de travail correspondant à la première information de travail, et
- l'unité de conversion (120)
lie la deuxième information de travail à l'ID client et à l'ID de dispositif reçus par l'unité de communication (110), et
quand l'ID client correspondant à la clé API correspond à l'ID client lié à la deuxième information de travail, délivre la deuxième information de travail à l'appareil ou aux appareils de médiation (200) requérant la réception et la fourniture de la deuxième information de travail, par l'intermédiaire de l'unité de communication (110) ainsi que l'ID de dispositif.

6. L'appareil de collecte d'information (100) selon la revendication 4 ou 5, dans lequel
- l'unité de stockage (130) stocke, d'une manière liée mutuellement, un ID d'appareil fournisseur de chacun de la pluralité d'appareils fournisseurs (300) et un ID de dispositif de chacun du ou des dispositifs (210),
- l'unité de communication (110) reçoit l'information de résultat indiquant un résultat d'un dispositif (210) connecté à l'appareil ou aux appareils de médiation (200) au(x)quel(s) la deuxième information de travail a été délivrée exécutant le traitement spécifique conformément à la deuxième information de travail, en provenance du ou des appareils de médiation (200) au(x)quel(s) la deuxième information de travail a été délivrée, ainsi que l'ID de dispositif du dispositif (210) qui a exécuté le traitement spécifique, et
- l'unité de conversion (120)
spécifie, en se référant à l'unité de stockage (130), un ou plusieurs IDs d'appareils fournisseurs incluant l'ID d'appareil fournisseur qui sont liés à l'ID de dispositif reçu par l'unité de communication (110),
convertit l'information de résultat en information mise à jour d'une manière propre à chacun d'un ou plusieurs appareil(s) fournisseur(s) (300) correspondant à l'ID ou aux ID d'appareil(s) fournisseur(s), et
distribue l'ID de dispositif et l'information mise à jour à l'appareil ou aux appareils fournisseurs (300) correspondant à l'ID ou aux ID d'appareil(s) fournisseur(s) incluant l'ID d'appareil fournisseur par l'intermédiaire de l'unité de communication (110).

7. L'appareil de collecte d'information (100) selon la revendication 1, dans lequel
- l'unité de communication (110) reçoit, du ou des dispositifs (210) à gérer, de l'information de dispositif sur le ou les dispositifs (210) par l'intermédiaire du ou des appareils de médiation (200) ; et
- l'unité de conversion (120) convertit l'information de dispositif en une information mise à jour d'une manière propre à chacun d'un ou plusieurs appareil(s) fournisseur(s) (300), parmi une pluralité d'appareils fournisseurs qui fournissent à un client un service de gestion d'un ou plusieurs dispositifs (210) par l'intermédiaire d'un ou des plusieurs appareils de médiation (200), qui gèrent le ou les dispositifs (210) correspondant à l'information de dispositif reçue par l'unité de communication (110), et distribue l'information mise à jour à l'appareil ou aux appareils fournisseurs (300) par l'intermédiaire de l'unité de communication (110).

8. L'appareil de collecte d'information (100) selon la revendication 7, comprenant en outre une unité de stockage (130) qui store, d'une manière liée mutuellement, un ID de dispositif de chacun du ou des dispositifs (210) et un ID d'appareil fournisseur de chacun de la pluralité d'appareils fournisseurs (300), dans lequel
- l'unité de communication (110) reçoit l'information de dispositif en provenance du ou des dispositifs (210) ainsi que l'ID de dispositif, et
l'unité de conversion (120) spécifie, en se référant à l'unité de stockage (130), un ou plusieurs IDs d'appareils fournisseurs incluant l'ID d'appareil fournisseur qui sont liés à l'ID de dispositif reçu par l'unité de communication (110), et distribue l'ID de dispositif et l'information mise à jour à l'appareil ou aux appareils fournisseurs (300) correspondant à l'ID ou aux ID d'appareil(s) fournisseur(s) incluant l'ID d'appareil fournisseur par l'intermédiaire de l'unité de communication (110).

9. L'appareil de collecte d'information (100) selon l'une quelconque des revendications 1 à 8, dans lequel la manière propre à chacun de la pluralité d'appareils fournisseurs (300) est une désignation parmi une désignation de script via une coquille distante, en anglais Remote Shell (rsh), une désignation de script via une coquille sécure (SSH), en anglais Secure Shell, ou une désignation de script par l'intermédiaire d'un traitement automatique d'email.

10. Un procédé de collecte d'information pour collecter de l'information sur un ou plusieurs dispositifs (210) par l'intermédiaire d'un ou de plusieurs appareils de médiation (200), le procédé de collecte d'information (100) comprenant les étapes consistant à :
- effectuer une réception en recevant, en provenance d'une pluralité d'appareils fournisseurs (300) qui fournissent à un client (410) un service de gestion du ou des dispositifs (210), une première information de travail, décrivant d'une manière propre à chacun de la pluralité d'appareils fournisseurs (300), un traitement spécifique qu'une cible est amenée à exécuter, la cible comportant à la fois le ou les appareils de médiation (200) et le ou les dispositifs (210), ou seulement le ou les appareils de médiation (200) ; et
- effectuer une conversion en convertissant la première information de travail reçue dans l'étape d'effectuer une réception en une deuxième information de travail décrivant le traitement spécifique que la cible est amenée à exécuter d'une manière telle que le ou les appareils de médiation (200) peuvent la reconnaître, et en délivrant la deuxième information de travail à l'appareil ou aux appareils de médiation (200) par l'intermédiaire de l'unité de communication (110), dans lequel
- au moins l'un quelconque parmi le ou les dispositif (210) et le ou les appareils de médiation (200) est associé avec la pluralité des appareils fournisseurs (300) dans une relation de type un-à plusieurs,
le procédé de collecte d'information comprenant en outre les étapes de :
- recevoir une information de résultat indiquant un résultat de l'exécution par la cible du traitement spécifique conformément à la deuxième information de travail, en provenance du ou des appareils de médiation (200), et
- convertir l'information de résultat en une information mise à jour de la manière propre à chacun de la pluralité d'appareils fournisseurs (300) associé avec ledit au moins un quelconque.

11. Le procédé de collecte d'information selon la revendication 10, comprenant en outre les étapes de :
- effectuer une autre réception en recevant, par l'intermédiaire du ou des appareils de médiation (200), de l'information de dispositif sur le ou les dispositifs (210) à gérer ; et
- effectuer une autre conversion en convertissant l'information de dispositif en information mise à jour d'une manière propre à chacun d'un ou plusieurs appareil(s) fournisseur(s) (300), parmi une pluralité d'appareils fournisseurs qui fournissent à un client (410) un service de gestion du ou des dispositifs (210) par l'intermédiaire du ou des appareils de médiation (200), qui gèrent le ou les dispositifs (210) correspondant à l'information de dispositif reçue à l'étape d'effecteur l'autre réception, et en distribuant l'information mise à jour à l'appareil ou aux appareils fournisseurs (300).

12. Un programme d'ordinateur qui, lorsqu'il est exécuté par un ordinateur, amène l'ordinateur à exécuter un procédé de collecte d'information pour collecter des informations sur un ou plusieurs dispositifs (210) par l'intermédiaire d'un ou de plusieurs appareils de médiation (200), le procédé de collecte d'information (100) comprenant les étapes consistant à :
- recevoir, en provenance d'une pluralité d'appareils fournisseurs (300) qui fournissent à un client (410) un service de gestion du ou des dispositifs (210), une première information de travail, décrivant d'une manière propre à chacun de la pluralité d'appareils fournisseurs (300), un traitement spécifique qu'une cible est amenée à exécuter, la cible comportant à la fois le ou les appareils de médiation (200) et le ou les dispositifs (210), ou seulement le ou les appareils de médiation (200) ; et
- effectuer une conversion en convertissant la première information de travail reçue dans l'étape de réception en une deuxième information de travail décrivant le traitement spécifique que la cible est amenée à exécuter d'une manière telle que le ou les appareils de médiation (200) peuvent la reconnaître, et en délivrant la deuxième information de travail à l'appareil ou aux appareils de médiation (200), dans lequel
- au moins un quelconque parmi le ou les dispositif (210) et le ou les appareils de médiation (200) est associé avec la pluralité des appareils fournisseurs (300) dans une relation de type un-à plusieurs,
le procédé de collecte d'information comprenant en outre les étapes de :
- recevoir une information de résultat indiquant un résultat de l'exécution par la cible du traitement spécifique conformément à la deuxième information de travail, en provenance du ou des appareils de médiation (200), et
- convertir l'information de résultat en une information mise à jour de la manière propre à chacun de la pluralité d'appareils fournisseurs (300) associé avec ledit au moins un quelconque, et distribuer l'information mise à jour simultanément à la pluralité d'appareils fournisseurs (300) associés avec ledit au moins un quelconque.

13. Le programme d'ordinateur selon la revendication 12, dans lequel le procédé de collecte d'information (100) comprenant en outre les étapes consistant à :
- effectuer une autre réception en recevant, par l'intermédiaire du ou des appareils de médiation (200), de l'information de dispositif sur le ou les dispositifs (210) à gérer ; et
- effectuer une autre conversion en convertissant l'information de dispositif en information mise à jour d'une manière propre à chacun d'un ou plusieurs appareil(s) fournisseur(s) (300), parmi une pluralité d'appareils fournisseurs (300) qui fournissent à un client (410) un service de gestion d'un ou de plusieurs dispositifs (210) par l'intermédiaire d'un ou de plusieurs appareils de médiation (200), qui gèrent le ou les dispositifs (210) correspondant à l'information de dispositif reçue à l'étape d'effectuer l'autre réception, et en distribuant l'information mise à jour à l'appareil ou aux appareils fournisseurs (300).
